Europäisches Patentamt

European Patent Office

Office européen des brevets

(19)

(11) Veröffentlichungsnummer : **0 114 295**
**B1**

(12) **EUROPÄISCHE PATENTSCHRIFT**

(45) Veröffentlichungstag der Patentschrift :
03.12.86

(21) Anmeldenummer : 83112509.1

(22) Anmeldetag : 13.12.83

(51) Int. Cl.⁴ : **A 01 D 67/00**, A 01 D 46/08

(54) An einen Schlepper anbaubare Erntebergungsvorrichtung.

(30) Priorität : 27.12.82 US 453435

(43) Veröffentlichungstag der Anmeldung :
01.08.84 Patentblatt 84/31

(45) Bekanntmachung des Hinweises auf die Patenterteilung : 03.12.86 Patentblatt 86/49

(84) Benannte Vertragsstaaten :
DE FR GB IT

(56) Entgegenhaltungen :
US-A- 2 936 562
US-A- 4 348 856

(73) Patentinhaber : DEERE & COMPANY
1 John Deere Road
Moline Illinois 61265 (US)

(72) Erfinder : Schlueter, Francis Edward
6666 N.W. 5th Street
Des Moines Iowa 50313 (US)

(74) Vertreter : Sartorius, Peter et al
DEERE & COMPANY European Office, Patent Department Postfach 503 Steubenstrasse 36-42
D-6800 Mannheim 1 (DE)

EP 0 114 295 B1

**Beschreibung**

Die Erfindung bezieht sich auf eine an einen Schlepper anbaubare, mit einem mit der Hinterachse des Schleppers lösbar verbundenen Erntebergungsvorrichtungsteil versehene Erntebergungsvorrichtung mit einem Rahmen zur Aufnahme eines Sammelbehälters, der über aufrechtstehende vordere und hintere Tragstreben über dem Schlepper und auf diesem abstützbar, über mindestens einen Hydraulikzylinder verschwenkbar sowie über mindestens eine vordere Abstellvorrichtung und eine hintere Stützvorrichtung auf den Boden abstellbar ist, wobei die Tragstreben über Befestigungselemente, an denen für die hinteren Tragstreben mit diesen verbundene Träger angeordnet sind, lösbar mit dem Schlepper verbunden sind.

Es ist bereits eine Erntebergungsvorrichtung bekannt (US-A-2 936 562), die über jeweils zwei vertikale mit Abstand zueinander angeordnete Tragstreben an einen Schlepper lösbar angeschlossen ist. An den oberen Enden der Tragstreben befindet sich ein horizontal verlaufender Rahmen, in dem ein Sammelbehälter verschwenkbar gelagert ist, der hierzu mittels zweier Hydraulikzylinder zum Entleeren des Sammelbehälters verschwenkt werden kann. An den am Schlepper angeschlossenen hinteren Tragstreben befindet sich eine Erntebergungsvorrichtung, die über eine Halterung mit der Hinterachse des Schleppers lösbar verbunden ist. Zum Abbau der gesamten Erntebergungsvorrichtung werden die einzelnen Tragstreben an ihrem unteren Ende vom Schlepper gelöst sowie die Verbindungselemente zur Sicherung der Erntebergungsvorrichtung auf der Hinterachse entfernt und die gesamte Erntebergungsvorrichtung über zusätzliche Stützelemente, die an den Tragstreben angeschlossen werden, auf dem Boden abgestellt. Danach läßt sich der Schlepper unter dem Sammelbehälter herausfahren und für andere Arbeitseinsätze verwenden. Eine derartige Erntebergungsvorrichtung läßt sich jedoch nur an Schlepper anschließen, die ohne Fahrerkabine ausgerüstet sind, da die Rahmenteile mit ihren unteren Enden bis in den Bereich der Motorhaube des Schleppers gezogen sind.

Demgegenüber liegt der Erfindung die Aufgabe zugrunde, die Erntebergungsvorrichtung sowie die einzelnen Verbindungselemente zum Anschluß an den Schlepper derart auszubilden und anzuordnen, daß auch Schlepper mit einer Fahrerkabine ohne weiteres an eine Erntebergungsvorrichtung angeschlossen werden können. Diese Aufgabe ist dadurch gelöst worden, daß zwischen den hinteren Tragstreben und dem Erntebergungsvorrichtungsteil eine an einem Hubrahmen befestigte Halterung angeordnet ist, wobei an der Halterung die vordere Abstellvorrichtung und der Hydraulikzylinder einenends angeschlossen sind, während der Hydraulikzylinder anderenends am Träger angeschlossen ist, wobei der Träger bei Betätigung des Hydraulikzylinders gegenüber der vorderen Abstellvorrichtung gemeinsam mit dem Sammelbehälter derart verschwenkbar ist, daß sich der Schlepper nach Lösen der Befestigungselemente der Erntebergungsvorrichtung vom Schlepper nach vorne wegbewegen kann. Durch die vorteilhafte Ausbildung und Anordnung der Erntebergungsvorrichtung, insbesondere durch die Verwendung der Hubvorrichtung in Verbindung mit der Abstellvorrichtung, läßt sich die gesamte Erntebergungsvorrichtung ohne weiteres von einem Schlepper abbauen und gesondert abstellen, ohne daß eine Bedienungsperson die Hilfe weiterer Personen benötigt. Bei Einsatz einer Erntebergungsvorrichtung mit einem Sammelbehälter oberhalb der Fahrerkabine des Schleppers läßt sich die Erntebergungsvorrichtung gemeinsam mit dem Sammelbehälter über die Hubvorrichtung so weit nach hinten kippen, daß der Schlepper nach Lösen der einzelnen Verbindungselemente zum Anschluß der Erntebergungsvorrichtung an den Schlepper ohne weiteres unter dem Sammelbehälter weggefahren werden kann, da der Sammelbehälter bzw. die zugehörigen Rahmenteile aus der Bewegungsebene des Schleppers herausgebracht worden sind. Hierzu ist es vorteilhaft, daß der Träger an mindestens eine aufrechtstehende Tragstrebe angeschlossen ist. Durch die Verwendung der Hydraulikzylinder, die einenends an die Tragstreben und anderenends an die Hubvorrichtung angeschlossen sind, läßt sich nach Abstellen der Erntebergungsvorrichtung auf dem Boden der zugehörige Sammelbehälter ohne weiteres verschwenken und in der zurückgeschwenkten Stellung festlegen, so daß eine ungehinderte Vorwärtsfahrt des Schleppers ohne die gesamte Erntebergungsvorrichtung möglich ist.

Um ein Kippen der auf dem Boden abgestellten Erntebergungsvorrichtung mit der zugehörigen Hubvorrichtung zu vermeiden, ist es vorteilhaft, daß der Träger sich vom Schlepper nach hinten erstreckt und die Abstellvorrichtung im Bereich des Hydraulikzylinders mit der Halterung verbunden ist, wobei die Abstellvorrichtung sich nach unten und vorne erstreckt und eine an der Abstellvorrichtung angeschlossene Tragplatte zur Abstützung auf dem Boden vor dem Schwerpunkt der Erntebergungsvorrichtung liegt. Hierzu ist es ferner vorteilhaft, daß der Erntebergungsvorrichtungsteil über Rahmenteile an den Hubrahmen angeschlossen und mittels diesem schwenkbar ist und über eine zusätzliche an den Erntebergungsvorrichtungsteil angeschlossene Stützvorrichtung auf dem Boden abstützbar ist, wenn der Sammelbehälter vom Schlepper gelöst ist. Da die Tragstreben zur Aufnahme des Sammelbehälters im abgebauten Zustand der Erntebergungsvorrichtung dienen, ist es vorteilhaft, daß der Hydraulikzylinder bei angebauter Abstellvorrichtung zumindest die eine Tragstrebe um ihre an der Halterung vorgesehene Anschlußstelle schwenkt. Hiermit läßt sich mit wenigen baulichen Mitteln eine einfache Verschwenkung des Sammelbehälters mit der zugehörigen Tragstrebe vornehmen. Vorteilhaft ist es ferner, daß der Träger über lösbare Verbindungselemente mit dem Schlepper verbunden ist und die Abstellvorrichtungen lösbar mit der Halterung und der Erntebergungsvorrichtung verbunden sind und daß der Hydraulikzylinder mit seinem einen Ende an den Träger und mit seinem anderen Ende zumindest an eine Abstellvorrichtung angeschlossen ist.

Um den Abbau der an den Schlepper angeschlossenen Erntebergungsvorrichtung in kürzester Zeit durchführen zu können, ist es vorteilhaft, daß der Abbau der Erntebergungsvorrichtung nach folgenden Verfahrensschritten vorgenommen wird :

a) Die vordere Abstellvorrichtung und die hintere Stützvorrichtung werden an die Halterung bzw. den Rahmen zur Verhinderung einer vertikalen Schwenkbewegung des Erntebergungsvorrichtungsteils angebaut,

b) die vertikal verlaufenden Tragstreben werden von Schlepper gelöst,

c) nach dem Wegschwenken des Sammelbehälters aus der Bewegungsbahn des Schleppers und nachdem der Schlepper unter dem Sammelbehälter heraus nach vorne in eine Parkstellung gefahren ist, werden die Versorgungsleitungen zwischen dem Schlepper und der Erntebergungsvorrichtung gelöst.

In weiterer Ausgestaltung der Erfindung ist es vorteilhaft, daß der Hubrahmen gelenkig an die hinteren vertikal verlaufenden Tragstreben angeschlossen ist und zwei mit Abstand zueinander angeordnete vordere Abstellvorrichtungen aufweist, die an ihrem unteren Ende vertikal verlaufende Tragelemente verstellbar aufnehmen, die über eine Stabilisierungsstrebe miteinander verbunden sind, und daß mindestens ein an die Schlepperachse lösbar anschließbarer Träger über einen ersten Parallelogrammlenker mit dem Erntebergungsvorrichtungsteil gelenkig verbunden ist und ein zweiter Parallelogrammlenker die Tragstrebe mit dem Erntebergungsvorrichtungsteil gelenkig verbindet und daß der Hydraulikzylinder das untere Ende des Trägers mit einer am zweiten Parallelogrammlenker vorgesehenen Halterung verbindet, die auch zum Anschluß der vorderen Abstellvorrichtung im Bereich des Massenmittelpunktes des gesamten an den Schlepper anschließbaren Gerätes dient. Durch die vorteilhafte Verbindung der Erntebergungsvorrichtung über die beiden Parallelogrammlenker an die hinteren vertikal verlaufenden Tragstreben läßt sich eine einfache Verstellung der hinteren Erntebergungsvorrichtung und ein Kippen des Sammelbehälters mittels der beiden hinteren Tragstreben vornehmen.

Im folgenden wird die Erfindung anhand von lediglich einen Ausführungsweg darstellenden Zeichnungen näher erläutert.

Es zeigt :

Figur 1 die Seitenansicht eines Schleppers mit einer am hinteren Ende angeordneten Erntebergungsvorrichtung, die zum Abstellen mit Stützelementen ausgerüstet ist,

Figur 2 eine ähnliche Darstellung wie in Fig. 1, wobei jedoch die Hubzylinder ausgefahren und die hinteren Stützelemente nach hinten gekippt sind, um das Gerät in dieser Stellung abzubauen, wobei der Schlepper nach erfolgtem Abbau ungehindert nach vorne fahren kann,

Figur 3 ebenfalls eine Seitenansicht, insbesondere der Erntebergungsvorrichtung im abgebauten Zustand,

Figur 4 eine perspektivische Darstellung der einzelnen Tragelemente und der Hubeinrichtungen der Erntebergungsvorrichtung gemäß Fig. 1 sowie die vordere Stützvorrichtung.

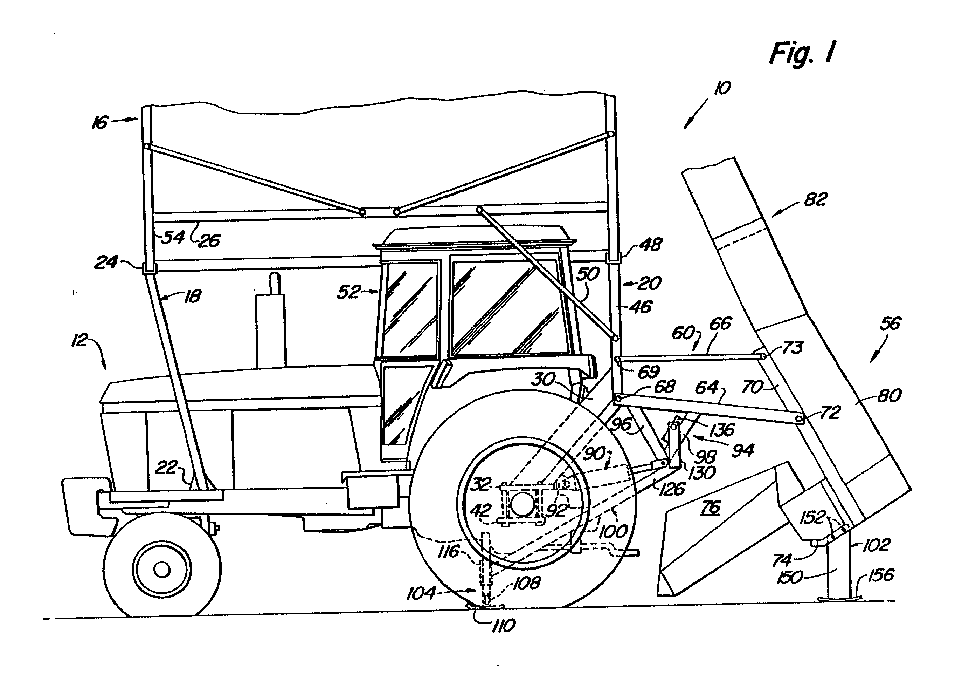

In der Zeichnung ist in Fig. 1 mit 10 eine an einen Schlepper 12 anschließbare Erntebergungsvorrichtung bezeichnet, die jedoch auch durch eine andere landwirtschaftlich nutzbare Gerätevorrichtung ersetzt werden kann. Die in Fig. 1 mit 10 bezeichnete Erntebergungsvorrichtung kann beispielsweise als Baumwollpflückeinrichtung ausgerüstet sein.

Die Erntebergungsvorrichtung 10 befindet sich hinter einem Aufnahmekorb bzw. Sammelbehälter 16 zur Aufnahme des Erntegutes, beispielsweise der geernteten Baumwolle. Der Aufnahmekorb 16 befindet sich oberhalb des Schleppers 12 und ist mittels zwei vorderen Tragstreben 18 und zwei hinteren Tragstreben 20 an einen am Schlepper vorgesehenen Tragrahmen lösbar angeschlossen. Die vorderen Tragstreben 18 weisen untere Stützteile 22 auf, die mit dem vorderen Teil des Rahmens des Schleppers 12 über in der Zeichnung nicht dargestellte Verbindungselemente bzw. Bolzen lösbar verbunden sind. Das obere Ende einer jeden Tragstrebe 18 ist ebenfalls bei 24 über Verbindungselemente mit einem Rahmen 26 des Sammelbehälters 16 lösbar verbunden.

Die hinteren Tragstreben 20 weisen nach oben und hinten geneigt verlaufende Träger 30 auf, die an eine Tragplatte 32 angeschlossen sind, die so ausgebildet ist, daß sie auf der Oberfläche einer Hinterachse 36 des Schleppers 12 montiert werden kann. Jeweils zwei Schraubenbolzen 38 und 40 erstrecken sich durch die obere Tragplatte 32 und eine untere parallel dazu verlaufende, ebenfalls gegen die Oberfläche der Achse 36 anliegende Tragplatte 42. Mittels der Tragplatten 32 und 42 können jeweils der linke und rechte Träger 30 an der Hinterachse 36 befestigt werden. Eine jede Tragstrebe 20 besteht aus einem vertikal verlaufenden Rechteckrohr 46, das mit seinem unteren Ende an den entsprechenden Träger 30 angeschlossen ist. Das obere Ende des Rechteckrohres 46 ist mittels einer Halterung 48 an den hinteren Teil des Rahmens 26 des Sammelbehälters 16 angeschlossen. Eine diagonal verlaufende Stabilisierungsstrebe 50 verbindet den mittleren Teil des Rechteckrohres 46 mit dem hinteren Teil des Rahmens 26. Der Schlepper 12 weist ferner eine Fahrerkabine 52 auf, die im angebauten Zustand des Sammelbehälters 16 sich etwas oberhalb der unteren Begrenzung der Teile 54 des Sammelbehälters 16 erstreckt.

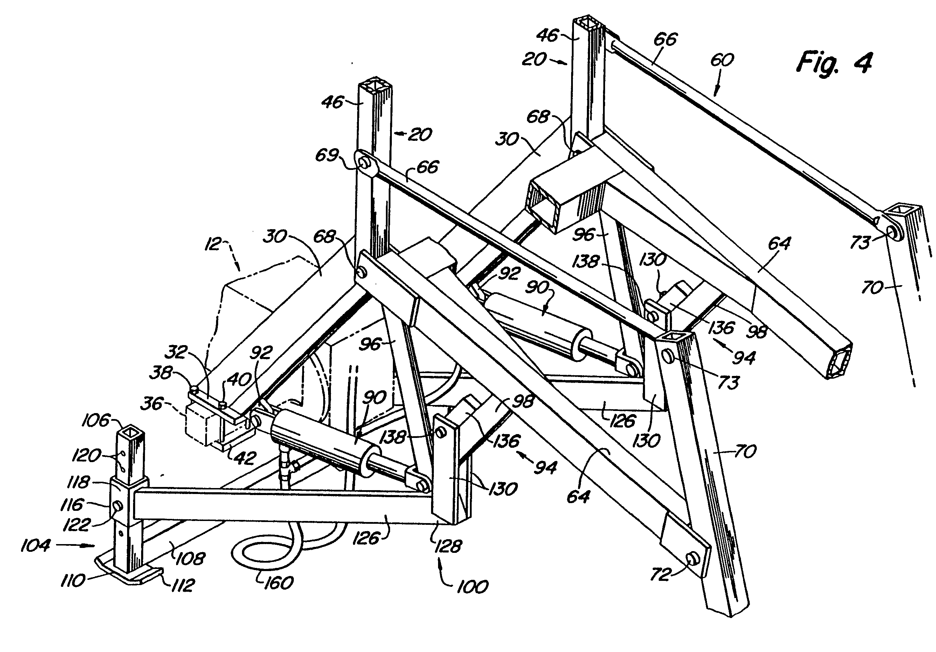

Die Erntebergungsvorrichtung 10 besteht aus einem hinteren Erntebergungsvorrichtungsteil 56, der an das hintere Ende des Schleppers 12 mittels eines Hubrahmens 60 (Fig. 1 und 4) angeschlossen ist. Der Hubrahmen 60 weist zwei mit Abstand zueinander angeordnete Träger bzw. Parallelogrammlenker 64 und zwei mit Abstand zueinander angeordnete Lenker bzw. Parallelogrammlenker 66 auf, die mittels Bolzen 68 und 69 an die Rechteckrohre 46 im Bereich der Verbindungsstelle zwischen dem Träger 30 und dem Rechteckrohr 46 gelenkig angeschlossen sind. Das hintere Ende des Trägers 64 und des Lenkers 66 ist jeweils an eine vertikal verlaufende Strebe 70 mittels Bolzen 72 und 73 gelenkig angeschlossen. Die Streben 70 sind an einem quer verlaufenden Rahmen 74 eines Fordergehäuses zur Aufnahme einer Förderschnecke befestigt, an dem zahlreiche nebeneinander angeordnete Ernteeinheiten 76 befestigt sind, die sich von dem Rahmen 74 nach vorne in den hinteren Bereich des Schleppers 12 erstrecken. An den Rahmen 74 ist ferner ein Fördergehäuse 80 angeschlossen, das sich von dem Rahmen 74 nach oben in den oberen Bereich des Sammelbehälters 16 oberhalb der Fahrerkabine 52 erstreckt. Das Fördergehäuse 80 weist ein teleskopartig ausgebildetes Gehäuseteil 82 auf, das zur Anpassung mit Bezug auf die Ernteeinheit bzw. den Sammelbehälter 16 entsprechend nach oben bzw. unten verstellt werden kann.

Der Hubrahmen 60 kann mit Bezug auf die Streben 18 und 20 entsprechend kippen. Hierzu sind hydraulische Stellmittel, beispielsweise ein- und ausfahrbare Hydraulikzylinder 90, vorgesehen, deren Zylinderenden an je einer Halterung 92 angeschlossen sind, die am entsprechenden Träger 30 im Bereich der Tragplatte 32 befestigt sind. Die Kolbenstange des Hydraulikzylinders 90 ist an eine Halterung 94 angeschlossen, die mit dem Träger 64 verbunden ist. Eine jede Halterung 94 weist zwei nach unten gerichtete, V-förmig angeordnete Arme 96 und 98 auf, die mittels ihres jeweiligen unteren Endes zum Zylinderstangenende des Hydraulikzylinders 90 zusammenlaufen und mit diesem verbunden sind, während die oberen Enden an dem Träger 64 angeschweißt sind. Der Hydraulikzylinder 90 ist über Hydraulikleitungen mit der Schlepperhydraulik des Schleppers 12 verbunden und kann über entsprechende Betätigung von Ventilen ein- und ausgefahren werden, um den Hubrahmen 60 zu kippen bzw. den Erntebergungsvorrichtungsteil 56 anzuheben bzw. abzusenken.

Um die Erntebergungsvorrichtung 10 an den Schlepper 12 anzubauen bzw. von diesem abzunehmen, weist diese eine Abstellvorrichtung 100 auf, die wahlweise an die Halterungen 94 des Hubrahmens 60 angebaut bzw. von diesem abgenommen werden kann. Ferner ist die Erntebergungsvorrichtung 10 mit hinteren Stützvorrichtungen 102 ausgerüstet, die mit dem Rahmen 74 fest verbunden sind. Die vordere Abstellvorrichtung 100 besteht aus einem unteren Tragfuß 104 mit einem vertikal verlaufenden, rechteckförmig ausgebildeten Tragrohr 106, das mit einem quer verlaufenden Träger 108 verbunden ist. Im Ausführungsbeispiel ist die Länge des Trägers 108 so gewählt, daß die Tragrohre 106 einen relativ großen Abstand untereinander aufweisen, der in etwa so groß ist wie der Abstand zwischen den vorderen Enden der unteren Träger 64 des Hubrahmens 60. Am unteren Ende weist der Tragfuß 104 eine horizontal verlaufende Tragplatte 110 auf, die an das untere Ende des Tragfußes 104 angeschweißt ist. Die Tragplatte 110 ist nach oben etwas abgebogen und weist hierzu geneigt verlaufende Schenkel bzw. abgerundete Kanten 112 auf. Eine rechteckförmige, rohrförmige Halterung 116 ist auf dem Tragrohr 106 aufgeschoben, die mit zahlreichen Bohrungen 120 ausgerüstet ist. Die Halterung 116 weist eine Seite 118 mit einer Bohrung zur Aufnahme eines Bolzens 122 auf, der je nach Höhenlage der Halterung 116 in die entsprechenden Bohrungen 120 des Tragrohres 106 eingesetzt werden kann, um somit die Halterung 116 zu sichern. An die Rückseite der Halterung 116 ist eine sich nach hinten erstreckende Strebe 126 angeschlossen, die sich von der Halterung 116 ferner nach oben erstreckt und die mit ihrem oberen Ende 128 zwischen zwei vertikal verlaufenden Flachteilen 130 angeordnet und mit diesem verschweißt ist. Die Flachteile 130 bzw. Platten verlaufen, wie bereits erwähnt, in vertikaler Richtung, wenn die Abstellvorrichtung 100 mit dem Hubrahmen verbunden ist. Zwischen den Flachteilen 130 sind auch die nach oben und hinten geneigt verlaufenden Arme 98 zum Anschluß des Hydraulikzylinders 90 angeordnet. Die Flachteile 130 sind ferner an die Arme 98 mittels eines Anschlages 136 angeschlossen und somit in dieser Lage gesichert, der hierzu zwischen den Flachteilen 130 angeordnet und mittels eines Bolzens 138 an die Flachteile 130 angeschlossen ist. Hierzu ist in den beiden Flachteilen 130 sowie in dem Anschlag 136 eine Bohrung vorgesehen. Das Kolbenstangenende des Hydraulikzylinders 90 liegt gegen die Stirnseite der Flachteile 130 an, wenn die Abstellvorrichtung 100 mit dem ausgefahrenen Hydraulikzylinder verbunden ist, so daß die Abstellvorrichtung im entgegengesetzten Uhrzeigerdrehsinn gemäß Fig. 1 und 4 gedrückt wird. Durch das Ausfahren der Kolbenstange des Hydraulikzylinders 90 wird der Tragfuß 104 der Abstellvorrichtung 100 gegen den Boden bzw. die Standfläche gedrückt, um somit weiteres Schwenken bzw. Kippen des Hubrahmens 60 um die Bolzen 68 und 69 zu verhindern. Jede zusätzliche Bewegung der Kolbenstange des Hydraulikzylinders 90 bewirkt, daß die hinteren Tragstreben 20 im Uhrzeigerdrehsinn kippen, zuerst um die Bolzen 68, die ihre Lage bei diesem Vorgang beibehalten, da diese direkt mit dem Träger 64 und mittelbar mit der Abstellvorrichtung 100 verbunden sind.

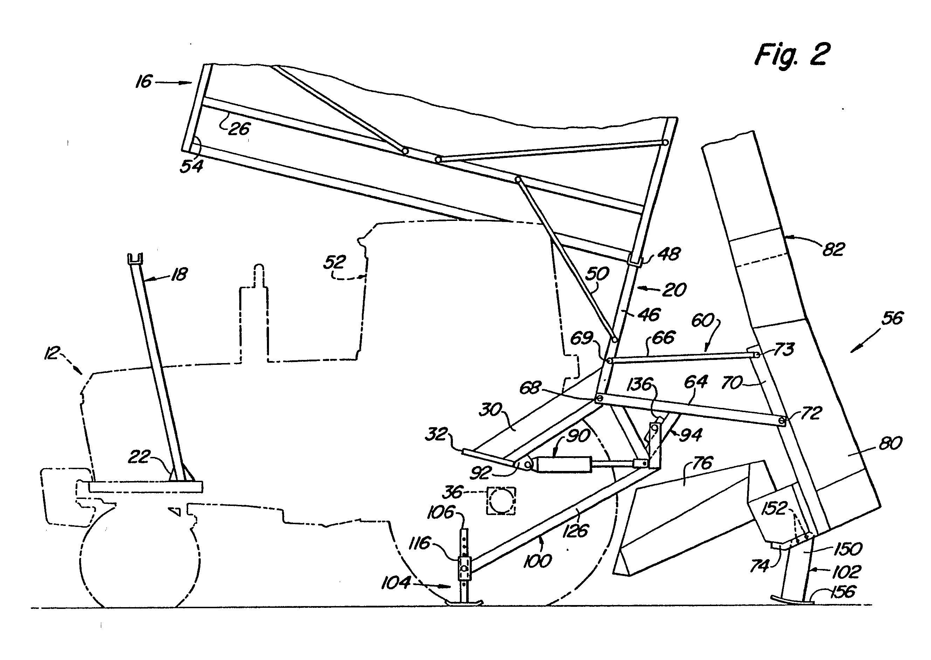

Die Stützvorrichtung 102 besteht aus aufrechtstehenden Platten 150, die mittels Bolzen 152 an den Rahmen 74 angeschlossen und an ihrem unteren Ende mit einer Tragplatte 156 versehen sind, die auf der Oberfläche des Bodens aufliegt. Die Stützvorrichtung 102 trägt den Rahmen des Gehäuses einer quer verlaufenden Schnecke derart, daß sie einen ausreichenden Bodenabstand aufweist, wenn der Erntebergungsvorrichtungsteil 56 an- bzw. abgebaut wird. Die Tragplatte 156 gestattet der Stützvorrichtung 102, nach vorne oder hinten verschoben oder gekippt zu werden (Fig. 2), wenn die Kolbenstange des Hydraulikzylinders 90 ausgefahren bzw. eingezogen wird, da sich der Abstand zwischen dem Tragfuß 104 der Abstellvorrichtung 100 und der Tragplatte 156 der hinteren Stützvorrichtung 102 verändert, wenn sich die Zuordnung bzw. Lage zwischen dem Erntebergungsvorrichtungsteil 56 und dem Sammelbehälter 16 verändert.

Während des Arbeitseinsatzes werden die vordere Abstellvorrichtung 100 und die hintere Stützvorrichtung 102 vollständig entfernt, und die Erntebergungsvorrichtung kann dann eingesetzt werden. Ist die Erntezeit vorüber oder soll beispielsweise der Schlepper 12 stillgelegt oder für einen anderen Zweck eingesetzt werden, so wird dieser mit der Erntebergungsvorrichtung in einem entsprechenden Abstellraum untergebracht. Der Erntebergungsvorrichtungsteil 56 wird dann über die Hydraulikzylinder 90 ausreichend hoch angehoben, um die Stützvorrichtung 102 unter dem Rahmen 74 entsprechend zu positionieren. Die Stützvorrichtung 102 wird hierzu über die Bolzen 152 mit dem Rahmen 74 lösbar verbunden. Durch Einfahren der Kolbenstangen der Hydraulikzylinder 90 wird das Gewicht des Rahmens 74 mit dem Erntebergungsvorrichtungsteil 56 auf die Stützvorrichtung 102 verlagert. Die vordere Abstellvorrichtung 100 wird dann unter der Hinterachse 36 des Schleppers 12 plaziert, so daß die Achse 36 über die Tragrohre 106 der Abstellvorrichtung 100 nach vorne hinwegfahren kann. Es wird dadurch erleichtert, daß der Anschlag 136 gegen die Arme 98 fest anliegt. Hierzu ist der Anschlag 136 über den Bolzen 138 mit den Flachteilen 130 verbunden. Das Tragrohr 106 läßt sich in der rohrförmigen Halterung 116 nach unten verschieben und anschließend mittels des Bolzens 122 in der Halterung 116 sichern, so daß somit auch die Strebe 126 in ihrer Lage festgelegt ist. Eine mit den Hydraulikzylindern 90 verbundene Hydraulikleitung 160 dient zum Parallelanschluß der beiden Hydraulikzylinder 90 an die Schlepperhydraulik. Die vorderen Schraubenbolzen 38 lassen sich von den Tragplatten 42 entfernen, wobei die hinteren Schraubenbolzen 40 lediglich gelöst bzw. ebenfalls entfernt werden können, so daß die obere Platte 32 von der Hinterachse 36 angehoben bzw. nach hinten gekippt werden kann, und zwar in Abhängigkeit vom Ausfahren der Kolbenstange des Hydraulikzylinders 90 aus der Stellung gemäß Fig. 1 in eine Stellung gemäß Fig. 2. Die vorderen Tragstreben 18 des Sammelbehälters 16 werden dann von dem vorderen Rahmen 26 des Sammelbehälters 16 bei 24 gelöst sowie die Verbindung der Schlepperzapfwelle mit den Antriebselementen der Erntebergungsvorrichtung 10 und auch die einzelnen Verbindungsleitungen bzw. Hydraulikleitungen zwischen dem Schlepper 12 und der Erntebergungsvorrichtung 10. Alle übrigen Teile an der Erntebergungsvorrichtung 10 bleiben unverändert. Mittels der Abstellvorrichtung 100 und der Stützvorrichtung 102 (siehe Fig. 1) kann die Bedienungsperson nun nach Beaufschlagen der Hydraulikzylinder 90 die Kolbenstangen ausfahren, so daß die hintere Tragstrebe 20 mit Bezug auf Fig. 2 im Uhrzeigerdrehsinn verschwenkt wird, und zwar im wesentlichen um die Bolzen 68 des unteren Trägers 64. Die Kolbenstange des Hydraulikzylinders 90 wird so lange ausgefahren, bis das Gewicht der Erntebergungsvorrichtung 10 nicht mehr auf der Hinterachse 36 des Schleppers 12 lastet und der Frontteil des Sammelbehälters 16 ausreichend hoch angehoben ist, so daß die Fahrerkabine 52 des Schleppers 12 unter dem Sammelbehälter 16 ungestört wegfahren kann. In Fig. 2 ist die ungefähre Stellung der Erntebergungsvorrichtung 10 mit dem Sammelbehälter 16 wiedergegeben, und diese zeigt somit die Relativbewegung der einzelnen Teile an. Die in Fig. 2 dargestellte Stellung kann jedoch etwas abweichen von einer normalen Arbeitsstellung einer Erntebergungsvorrichtung. Vorzugsweise bildet die Unterseite des Sammelbehälters 16 in der abgebauten Stellung mit der darunterliegenden Standfläche ungefähr einen Winkel von 8°. Dabei weist die Tragplatte 32 einen relativ großen Abstand zur Oberfläche der Hinterachse 36 auf. Nachdem der Sammelbehälter 16 im Uhrzeigerdrehsinn verschwenkt worden ist, ist hierzu auch das Fördergehäuse 80 entsprechend eingefahren, so daß der Sammelbehälter 16 mit dem Fördergehäuse 80 nicht kollidiert. Durch Kippen des Sammelbehälters 16 nach oben gleitet die Stützvorrichtung 102 etwas nach vorne und kippt etwas nach hinten, da der obere Lenker 66 die Strebe 70 im Uhrzeigerdrehsinn um den Bolzen 72 etwas nach hinten kippt. Das gesamte Gewicht der Erntebergungsvorrichtung 10 wird nun von der vorderen Abstellvorrichtung 100 sowie der hinteren Stützvorrichtung 102 aufgenommen. Das Gewicht des hinteren Erntebergungsvorrichtungsteils 56 bildet den Schwerpunkt der Erntebergungsvorrichtung 10, und zwar hinter der vorderen Abstellvorrichtung 100, so daß die gesamte Erntebergungsvorrichtung 10 völlig frei und selbständig auf dem Boden stehen kann (siehe Fig. 2). Nach diesen Arbeitsvorgängen kann der Schlepper 12 völlig ungehindert nach vorne fahren, wobei sich die Fahrerkabine 52 unter dem Sammelbehälter 16 fortbewegt. Die Hydraulikleitung 160 weist eine ausreichende Länge auf, so daß noch der Hydraulikzylinder an die Schlepperhydraulik angeschlossen bleiben kann, wenn die Bedienungsperson den Schlepper aus der Erntebergungsvorrichtung 10 herausfährt. Ist der Schlepper 12 aus der Erntebergungsvorrichtung 10 herausgefahren, so kann die Bedienungsperson die vorderen Tragstreben 18 vom Schlepperrahmen lösen und sie erneut bei 24 an den Sammelbehälter 16 anschließen.

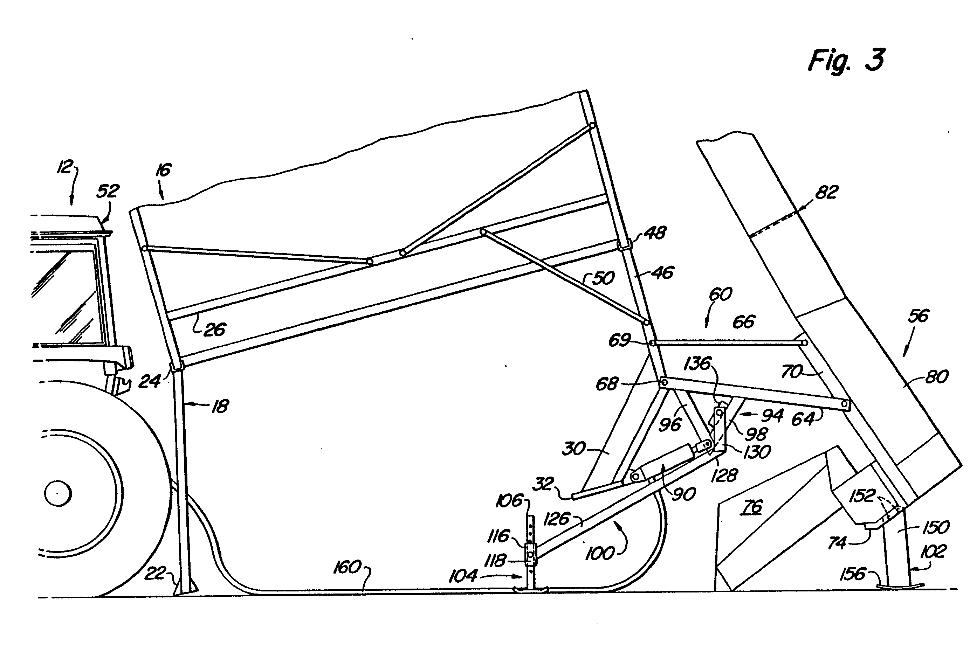

Die Tragstreben 18 lassen sich um 180° um ihre Längsachse verschwenken, so daß sie nach hinten in eine abgehobene Stellung verschwenkt werden können und dabei gegen die Unterseite des Sammelbehälters 16 zur Anlage kommen. Danach wird der Bedienungshebel für die Hydraulikanlage am Schlepper 12 verstellt und somit die Kolbenstange des Hydraulikzylinders 90 eingefahren, so daß der Sammelbehälter 16 gemäß Fig. 3 nach unten kippt, bis die unteren Enden des Stützteiles 22 der Tragstreben 18 auf der Bodenoberfläche aufsitzen. In dieser Stellung kann das Fördergehäuse 80 wieder in seine ursprüngliche Lage ausgefahren werden, wobei durch Einfahren der Kolbenstange auch die hintere Stützvorrichtung 102 auf der Oberfläche nach hinten gleitet, wenn die hinteren Rechteckrohre 46 um ihre Bolzen 68 nach vorne geschwenkt werden. Befindet sich die Erntebergungsvorrichtung 10 in der in Fig. 3 dargestellten Parkstellung, so kann die Bedienungsperson die Hydraulikleitung 160 vom Schlepper trennen, so daß dieser für andere Verwendungszwecke zur Verfügung steht.

Wenn die Erntebergungsvorrichtung 10 wieder am Schlepper 12 montiert werden soll, so erfolgt der Anbauvorgang in der umgekehrten Reihenfolge. Der Schlepper 12 wird bei der Stellung der Erntebergungsvorrichtung 10 gemäß Fig. 3 nach hinten fahren, und die Hydraulikleitung 160 wird wieder mit dem Schlepper verbunden. Danach werden Kolbenstangen der Hydraulikzylinder 90 ausgefahren, um den unten liegenden Teil 54 des Sammelbehälters 16 anzuheben, bis die Fahrerkabine 52 unter den Sammelbehälter 16 bewegt werden kann. Danach werden die vorderen Tragstreben 18 von dem Rahmen 26 des Sammelbehälters 16 gelöst. Nun kann die Bedienungsperson den Schlepper 12 zurückstoßen, bis die Fahrerkabine 52 sich unter dem Sammelbehälter 16 und die Tragplatten 32 der Tragstreben 20 sich direkt über der Hinterachse 36 befinden. Nun lassen sich die Stützteile 22 der Tragstreben 18 mittels Bolzen am Schlepper 12 anschließen. Anschließend werden die Kolbenstangen der Hydraulikzylinder 90 eingefahren, bis die Tragplatten 32 auf der Oberfläche der Hinterachse 36 aufsitzen und der vordere Teil 54 des Rahmens 26 so eingeschwenkt ist, daß die Tragstreben 18 mit dem Rahmen 26 des Sammelbehälters 16 über Bolzen verbunden werden können. Anschließend werden die Bolzen 38 und 40 in die Bohrung der Platten 32 und 42 eingesetzt und mittels Muttern gesichert, so daß die hintere Tragstrebe 20 fest mit der Hinterachse 36 verbunden ist. Nun können die hinteren Stützvorrichtungen 102 durch Entfernen der Bolzen von dem Rahmen 74 abgenommen und die vorderen Abstellvorrichtungen 100 durch Herausnahme der Bolzen aus den Anschlägen 136 und den Flachteilen 130 abgebaut werden. Danach lassen sich die Hydraulikleitungen 160 entfernen und die einzelnen Kabel sowie die Zapfwelle wieder an die Erntebergungsvorrichtung 10 anschließen. Aus Vorstehenden geht hervor, daß die Erntebergungsvorrichtung 10 auf sehr einfache Weise schnell und leicht an den Schlepper 12 angebaut bzw. von diesem wieder getrennt werden kann, ohne daß hierzu eine besondere Bedienungsperson erforderlich ist bzw. spezielle Arbeitswerkzeuge eingesetzt werden müssen.

**Patentansprüche**

1. An einen Schlepper anbaubare, mit einem mit der Hinterachse des Schleppers lösbar verbundenen Erntebergungsvorrichtungteil (56) versehene Erntebergungsvorrichtung (10) mit einem Rahmen (26) zur Aufnahme eines Sammelbehälters (16), der über aufrechtstehende vordere und hintere Tragstreben (18, 20) über dem Schlepper (12) und auf diesem abstützbar, über mindestens einen Hydraulikzylinder (90) verschwenkbar sowie über mindestens eine vordere Abstellvorrichtung (100) und eine hintere Stützvorrichtung (102) auf den Boden abstellbar ist, wobei die Tragstreben (18, 20) über Befestigungselemente, an denen für die hinteren Tragstreben (20) mit diesen verbundene Träger (30) angeordnet sind, lösbar mit dem Schlepper (12) verbunden sind, dadurch gekennzeichnet, daß zwischen den hinteren Tragstreben (20) und dem Erntebergungsvorrichtungteil (56) eine an einem Hubrahmen (60) befestigte Halterung (94) angeordnet ist, wobei an der Halterung (94) die vordere Abstellvorrichtung (100) und der Hydraulikzylinder (90) einenends angeschlossen sind, während der Hydraulikzylinder (90) anderenends am Träger (30) angeschlossen ist, wobei der Träger (30) bei Betätigung des Hydraulikzylinders (90) gegenüber der vorderen Abstellvorrichtung (100) gemeinsam mit dem Sammelbehälter (16) derart verschwenkbar ist, daß sich der Schlepper (12) nach Lösen der Befestigungselemente der Erntebergungsvorrichtung (10) vom Schlepper nach vorne wegbewegen kann.

2. Vorrichtung nach Anspruch 1, dadurch gekennzeichnet, daß der Träger (30) an mindestens eine aufrechtstehende Tragstrebe (20) angeschlossen ist.

3. Vorrichtung nach Anspruch 1 und 2, dadurch gekennzeichnet, daß der Träger (30) sich vom Schlepper (12) nach hinten erstreckt und die Abstellvorrichtung (100) im Bereich des Hydraulikzylinders (90) mit der Halterung (94) verbunden ist, wobei die Abstellvorrichtung (100) sich nach unten und vorne erstreckt und eine an der Abstellvorrichtung angeschlossene Tragplatte (110) zur Abstützung auf dem Boden vor dem Schwerpunkt der Erntebergungsvorrichtung (10) liegt.

4. Vorrichtung nach einem oder mehreren der vorherigen Ansprüche, dadurch gekennzeichnet, daß der Erntebergungsvorrichtungteil (56) über Rahmenteile (Rahmen 74, Strebe 70) an den Hubrahmen (60) angeschlossen und mittels diesem schwenkbar ist und über eine zusätzliche an den Erntebergungsvorrichtungteil (56) angeschlossene Stützvorrichtung (102) auf dem Boden abstützbar ist, wenn der Sammelbehälter (16) vom Schlepper (12) gelöst ist.

5. Vorrichtung nach einem oder mehreren der vorherigen Ansprüche, dadurch gekennzeichnet, daß der Hydraulikzylinder (90) bei angebauter Abstellvorrichtung (100, 102) zumindest die eine Tragstrebe (20) um ihre an der Halterung (94) vorgesehene Anschlußstelle schwenkt.

6. Vorrichtung nach einem oder mehreren der vorherigen Ansprüche, dadurch gekennzeichnet, daß der Träger (30) über lösbare Verbindungselemente (Tragplatten 32, 42) mit dem Schlepper (12) verbunden ist und die Abstellvorrichtungen (100 und 102) lösbar mit der Halterung (94) und der Erntebergungsvorrichtung (10) verbunden sind.

7. Vorrichtung nach Anspruch 5, dadurch gekennzeichnet, daß der Hydraulikzylinder (90) mit seinem einen Ende an den Träger (30) und mit seinem anderen Ende zumindest an eine Abstellvorrichtung (100) angeschlossen ist.

8. Vorrichtung nach einem oder mehreren der vorherigen Ansprüche, dadurch gekennzeichnet, daß der Hubrahmen (60) gelenkig an die hinteren vertikal verlaufenden Tragstreben (20) angeschlossen ist und zwei mit Abstand zueinander angeordnete vordere Abstellvorrichtungen (100) aufweist, die an ihrem unteren Ende vertikal verlaufende Tragelemente (Tragrohr 106) verstellbar aufnehmen, die über eine Stabilisierungsstrebe (Träger 108) miteinander verbunden sind.

9. Vorrichtung nach einem oder mehreren der vorherigen Ansprüche, dadurch gekennzeichnet, daß mindestens ein an die Schlepperachse (36) lösbar anschließbarer Träger (30) über einen ersten Parallelogrammlenker mit dem Erntebergungsvorrichtungsteil (56) gelenkig verbunden ist und ein zweiter Parallelogrammlenker die Tragstrebe (20) mit dem Erntebergungsvorrichtungsteil (56) gelenkig verbindet und daß der Hydraulikzylinder (90) das untere Ende des Trägers (30) mit einer am zweiten Parallelogrammlenker vorgesehenen Halterung (94) verbindet, die auch zum Anschluß der vorderen Abstellvorrichtung (100) im Bereich des Massenmittelpunktes des gesamten an den Schlepper (12) anschließbaren Gerätes dient.

10. Verfahren zum Abbau einer an einen Schlepper (12) anbaubaren Erntebergungsvorrichtung (10) nach einem oder mehreren der vorherigen Ansprüche, gekennzeichnet durch folgende Verfahrensschritte :

a) die vordere Abstellvorrichtung (100) und die hintere Stützvorrichtung (102) werden an die Halterung (94) bzw. den Rahmen (74) zur Verhinderung einer vertikalen Schwenkbewegung des Erntebergungsvorrichtungsteils (56) angebaut,

b) die vertikal verlaufenden Tragstreben (18, 20) werden vom Schlepper gelöst,

c) nach dem Wegschwenken des Sammelbehälters (16) aus der Bewegungsbahn des Schleppers und nachdem der Schlepper unter dem Sammelbehälter (16) heraus nach vorne in eine Parkstellung gefahren ist, werden die Versorgungsleitungen (160) zwischen dem Schlepper (12) und der Erntebergungsvorrichtung (10) gelöst.

## Claims

1. Crop pick-up attachment (10) mountable on a tractor, provided with a crop pick-up part (56) detachably connected to the rear axle of the tractor, and having a frame (26) for receiving a storage tank (16) which is supportable above the tractor (12) and on it by means of upright front and rear bearing struts (18, 20), is tiltable by means of at least one hydraulic cylinder (90) and can be set down on the ground by means of at least one front parking device (100) and a rear supporting device (102), the bearing struts (18, 20) being detachably connected to the tractor (12) by means of fixing elements on which, in the case of the rear bearing struts (20), supports (30) connected to the latter are arranged, characterised in that a mounting (94) fixed to a lifting frame (60) is arranged between the rear bearing struts (20) and the part (56) of the crop pick-up attachment, the front parking device (100) and the hydraulic cylinder (90) being connected at one end to the mounting (94), while the hydraulic cylinder (90) is connected at the other end to the support (30), the support (30) being tiltable jointly with the storage tank (16) in such manner with respect to the front parking device (100) on actuation of the hydraulic cylinder (90) that after release of the fixing elements of the crop pick-up attachment (10) from the tractor (12), the latter can move away forward.

2. Attachment according to claim 1, characterised in that the support (30) is connected to at least one upright bearing strut (20).

3. Attachment according to claims 1 and 2, characterised in that the support (30) extends rearwardly from the tractor (12) and the parking device (100) is connected to the mounting (94) in the region of the hydraulic cylinder (90), the parking device (100) extending downwardly and forwardly and a bearing plate (110) connected to the parking device for support on the ground being located in front of the centre of gravity of the crop pick-up attachment (10).

4. Attachment according to one or more of the preceding claims, characterised in that the crop pick-up part (56) is connected via frame parts (frame 74, strut 70) to the lifting frame (60) and is tiltable by means of the latter and is supportable on the ground by means of an additional supporting device (102) connected to the part (56) when the storage tank (16) has been detached from the tractor (12).

5. Attachment according to one or more of the preceding claims, characterised in that with the parking equipment (100, 102) attached, the hydraulic cylinder (90) swings at least one bearing strut (20) about its connection point provided on the mounting (94).

6. Attachment according to one or more of the preceding claims, characterised in that the support (30) is connected to the tractor (12) by means of detachable connecting elements (supporting plates 32, 42) and the parking devices (100 and 102) are detachably connected to the mounting (94) and the crop pick-up attachment (10).

7. Attachment according to claim 5, characterised in that the hydraulic cylinder (90) is connected by one of its ends to the support (30) and by its other end at least to one parking device (100).

8. Attachment according to one or more of the preceding claims, characterised in that the lifting frame (60) is articulated to the rear vertically extending bearing struts (20) and has two front parking devices (100) arranged at a distance from one another which accommodate adjustably at their lower end vertically extending supporting elements (support tube 106) which are connected to one another by means of a stabilizing strut (beam 108).

9. Attachment according to one or more of the preceding claims, characterised in that at least one support (30) detachably connectable to the tractor axle (36) is articulated to the part (56) of the crop pick-up attachment by way of a first parallelogram link and a second parallelogram link articulates the bearing strut (20) to the part (56) of the crop pick-up attachment, and the hydraulic cylinder (90) connects the lower end of the support (30) to a mounting (94) provided on the second parallelogram link and which also serves for connecting the front parking device (100) in the region of the centre of mass of the entire implement connectable to the tractor (12).

10. Method of dismounting a crop pick-up attachment (10) according to one or more of the preceding claims mountable on a tractor (12), characterised by the following steps :

a) the front parking device (100) and the rear supporting device (102) are attached to the mounting (94) and the frame (74), respectively, to prevent a vertical tilting movement of the part (56) of the crop pick-up attachment,

b) the vertically extending bearing struts (18, 20) are detached from the tractor,

c) after the storage tank (16) has been tilted away out of the path of movement of the tractor and after the tractor has been driven out forward below the storage tank (16) into a parking position, the supply lines (160) between the tractor (12) and the crop pick-up attachment (10) are disconnected.

**Revendications**

1. Dispositif de récolte (10) pouvant être raccordé à un tracteur, comportant une partie de dispositif de récolte (56) pouvant être reliée de façon amovible au pont arrière du tracteur, comportant un châssis (26) pour la réception d'un réceptacle collecteur ou trémie (16), pouvant prendre appui sur le tracteur au-dessus de celui-ci par l'intermédiaire de montants porteurs verticaux antérieurs et postérieurs (18, 20), pouvant basculer par l'intermédiaire d'au moins un vérin hydraulique (90) et pouvant être déposé sur le sol par l'intermédiaire d'au moins un dispositif de dépose antérieur (100) et d'un dispositif d'appui postérieur (102), les montants porteurs (18, 20) étant reliés de façon amovible au tracteur (12) par l'intermédiaire d'éléments de fixation sur lesquels sont placés des supports (30) pour les montants porteurs postérieurs (20) reliés à ceux-ci, caractérisé en ce qu'entre le montant porteur postérieur (20) et la partie (56) du dispositif de récolte, on prévoit un élément de raccordement (94) fixé à un châssis de relevage (60), le dispositif de dépose antérieur (100) et le vérin hydraulique (90) étant reliés à l'élément de raccordement (94) par une extrémité, tandis que le vérin hydraulique (90) est relié par son autre extrémité au support (30), le support (30) pouvant, lors de l'actionnement du vérin hydraulique (90), basculer par rapport au dispositif de dépose antérieur (100) en même temps que la trémie (16) de telle façon qu'après avoir séparé les éléments de fixation, on peut éloigner le dispositif de récolte (10) du tracteur en le déplaçant vers l'avant.

2. Dispositif suivant la revendication 1, caractérisé en ce que le support (30) est relié à au moins un montant porteur vertical (20).

3. Dispositif suivant les revendications 1 et 2, caractérisé en ce que le support (30) s'étend à partir du tracteur (12) vers l'arrière et en ce que le dispositif de dépose (100) est relié à la fixation (94) dans la zone du vérin hydraulique (90), le dispositif de dépose (100) s'étendant vers le bas et vers l'avant et une plaque de support (ou semelle) (110), reliée au dispositif de dépose, destinée à l'appui sur le sol, étant placée devant le centre de gravité du dispositif de récolte (10).

4. Dispositif suivant une ou plusieurs des revendications précédentes, caractérisé en ce que la partie (56) du dispositif de récolte est reliée par des éléments ou membrures de châssis (châssis 74, jambe de force 70) au châssis de relevage (60) et peut basculer sous l'action de celui-ci, et peut s'appuyer sur le sol par l'intermédiaire d'un dispositif d'appui supplémentaire (102) relié à la partie (56) du dispositif de récolte, lorsque la trémie (16) est séparée du tracteur (12).

5. Dispositif suivant une ou plusieurs des revendications précédentes, caractérisé en ce que le vérin hydraulique (90) fait, lorsque les dispositifs de dépose et d'appui (100, 102) sont en place, pivoter au moins l'un des montants porteurs (20) autour de son point de raccordement prévu sur la fixation (94).

6. Dispositif suivant une ou plusieurs des revendications précédentes, caractérisé en ce que le support (30) est relié au tracteur (12) par des éléments de liaison amovibles (plaques de support (32, 42), et en ce que les dispositifs de dépose et d'appui (100 et 102) sont reliés de façon amovible à l'élément de raccordement (94) et au dispositif de récolte (10).

7. Dispositif suivant la revendication 5, caractérisé en ce que le vérin hydraulique (90) est relié, par l'une de ses extrémités, au support (30) et, par son autre extrémité, au moins à un dispositif de dépose (100).

8. Dispositif suivant une ou plusieurs des revendications précédentes, caractérisé en ce que le châssis de relevage (60) est articulé aux montants porteurs verticaux postérieurs (20) et comporte deux dispositifs de dépose antérieurs (100) disposés à distance mutuelle qui reçoivent de façon réglable à leur extrémité inférieure des éléments de support verticaux (tube de support 106) qui sont reliés entre eux par l'intermédiaire d'une contrefiche de stabilisation (entretoise de support 108).

9. Dispositif suivant une ou plusieurs des revendications précédentes, caractérisé en ce qu'au moins un support (30) pouvant être relié de façon amovible au pont (36) du tracteur, est relié de façon articulée à la partie (56) du dispositif de récolte par une première biellette de parallélogramme articulé, tandis que le montant porteur (20) est relié de façon articulée, par une seconde biellette de parallélogramme articulé à la partie (56) du dispositif de récolte, et en ce que le vérin hydraulique (90) relie l'extrémité inférieure du support (30) à un second élément de raccordement (94) prévu sur la seconde biellette de parallélogramme articulé, qui sert également au raccordement du dispositif de dépose antérieur (100) dans la zone du centre de gravité de l'ensemble du dispositif porté pouvant être rattaché au tracteur (12).

10. Procédé pour démonter un dispositif de récolte (10) pouvant être rattaché à un tracteur (12) suivant une ou plusieurs des revendications précédentes, caractérisé par les stades opératoires suivants :

a) on rattache le dispositif de dépose antérieur (100) et le dispositif d'appui postérieur (102) à l'élément de raccordement (94) ou au châssis (74) pour empêcher un mouvement de basculement vertical de la partie (56) du dispositif de récolte ;

b) on sépare les montants porteurs verticaux (18, 20) du tracteur ;

c) après avoir éloigné par pivotement le réceptacle collecteur (16) de la trajectoire du tracteur et après avoir dégagé le tracteur en le faisant avancer jusqu'à une position de stationnement en le faisant passer sous le réceptacle collecteur (16), on démonte les conduites d'alimentation (160) entre le tracteur (12) et le dispositif de récolte (10).

Fig. I

Fig. 2

Fig. 3

Fig. 4

0 114 295